# EUROPÄISCHE PATENTSCHRIFT

(11) **EP 1 226 344 B1**
(45) Veröffentlichungstag und Bekanntmachung des Hinweises auf die Patenterteilung: **07.12.2005**
(21) Anmeldenummer: 00967746.9
(22) Anmeldetag: 22.09.2000
(51) Int. Cl.: F02D 13/02, F02B 75/02

(54) **VERFAHREN ZUM BETREIBEN EINER ZUMINDEST EINEN IN EINEM ZYLINDER GEFÜHRTEN ARBEITSKOLBEN AUFWEISENDEN BRENNKRAFTMASCHINE**
METHOD FOR OPERATING AN INTERNAL COMBUSTION ENGINE COMPRISING AT LEAST ONE WORKING CYLINDER WHICH IS GUIDED IN A CYLINDER
PROCEDE POUR ACTIONNER UN MOTEUR A COMBUSTION INTERNE PRESENTANT AU MOINS UN PISTON DE TRAVAIL GUIDE DANS UN CYLINDRE

(30) Priorität: 21.10.1999 DE 19950677
(43) Veröffentlichungstag der Anmeldung: 31.07.2002
(73) Patentinhaber: Volkswagen Aktiengesellschaft, 38436 Wolfsburg (DE)
(72) Erfinder: STIEBELS, Bernd, 38528 Adenbüttel (DE); POTT, Ekkehard, 38518 Gifhorn (DE); SPIEGEL, Leo, 71665 Vaihingen/Enz (DE)
(74) Vertreter: Kandlbinder, Markus Christian
(86) Internationale Anmeldenummer: PCT/EP2000/009280
(87) Internationale Veröffentlichungsnummer: WO 2001/029384

(56) Entgegenhaltungen:
- WO-A-96/01939
- DE-A- 2 544 766
- DE-A- 2 851 504
- DE-A- 3 418 361
- DE-A- 4 012 490
- DE-C- 19 712 356
- US-A- 5 724 927
- PATENT ABSTRACTS OF JAPAN vol. 1997, no. 01, 31. Januar 1997 (1997-01-31) & JP 08 246823 A (NAKAGAWA MINORU), 24. September 1996 (1996-09-24)

## Beschreibung

Die Erfindung betrifft ein Verfahren zum Betreiben einer zumindest einen in einem Zylinder geführten Arbeitskolben aufweisenden Brennkraftmaschine gemäß dem Oberbegriff des Anspruchs 1.

Brennkraftmaschinen, insbesondere magerlauffähige Ottomotoren und im speziellen direkteinspritzende Ottomotoren werden mit Verdichtungsverhältnissen betrieben, die auf Klopffestigkeit im Volliastbetrieb ausgelegt sind. Bei Ottomotoren liegt dieses Verdichtungsverhältnis - in Abhängigkeit von der konstruktiven Gestaltung, vom Vorhandensein und Art der Aufladung sowie der zu verwendenden Kraftstoffe - bei 8,5:1 bis maximal 12,5:1. Daher müssen insbesondere im Teillastbetrieb Wirkungsgradverluste hingenommen werden, da in diesem Teillastbereich höhere Verdichtungsverhältnisse gefahren werden könnten. Es ist nun bekannt, Brennkraftmaschinen mit einer mechanischen Verstellung des geometrischen Verdichtungsverhältnisses auszubilden, wodurch eine Anpassung an verschiedene Lastbereiche möglich ist Derartige Brennkraftmaschinen mit Verstellung der Größe ihrer Verbrennungsräume sind beispielsweise aus der DE-OS 28 51 504, DE 35 21 626 C2 und der DE 36 39 850 A1 bekannt. Diese Verdichtungsverstellung ist jedoch sehr teuer, kompliziert und mit erheblichen Reibungsverlusten behaftet. Bei den bekannten Brennkraftmaschinen ohne Verdichtungsverhältnis-Verstellung werden deshalb die Wirkungsgradverluste toleriert.

Es ist auch bekannt, nach dem so genannten Miller- oder Atkinson-Prinzip das Verdichtungsverhältnis zu beeinflussen. Nach diesem Stand der Technik erfolgt eine Verstellung der Einlass-Nockenwelle, so dass der Öffnungszeitpunkt und Schließzeitpunkt des Einlassventils variiert werden kann. Schließzeitpunkt und Öffnungszeitpunkt sind jedoch miteinander gekoppelt. Sie werden also insgesamt nach früher oder später verlagert. Durch die Verschiebung des Schließ- und Öffnungszeitpunktes ergeben sich jedoch Füllungsverluste der Brennräume, die bei Lambda=1-geregelten Brennkraftmaschinen über eine kostenintensive und Wirkungsgrad mindemde mechanische Aufladung kompensiert werden.

Aus der DE 40 12 490 A1 ist eine Gemisch verdichtende Brennkraftmaschine bekannt, die mit einer Ventilsteuerzeitverschiebungseinrichtung ausgestattet ist, so dass Öffnungs- und Schließzeitpunkte der Ein- und Auslassventile unabhängig voneinander eingestellt werden können. Dennoch weist auch die aus dieser Druckschrift bekannte Brennkraftmaschine Wirkungsgradnachteile, insbesondere im Teillastbetrieb, auf.

Aus der WO 96 01939 A ist eine Brennkraftmaschine bekannt, bei der ein Expansionsverhältnis in jedem Zylinder größer ist als ein Kompressionsverhältnis des jeweiligen Zylinders. Dies wird dadurch erreicht, das ein Einlassventil eines jeden Zylinders bereits geschlossen wird, bevor der jeweilige Kolben den Ansaughub vollendet hat. Hierbei wird der Zeitpunkt des Schließens des Einlassventiles mit zunehmender Drehzahl der Brennkraftmaschine von vor dem vollenden des Ansaughubes bis zu einem Zeitpunkt nach dem vollenden des Ansaughubes verschoben.

Es ist daher Aufgabe der Erfindung, ein Verfahren zum Betreiben einer zumindest einen in einem Zylinder geführten Arbeitskolben aufweisenden Brennkraftmaschine anzugeben, das die vorstehend genannten Nachteile nicht aufweist und zu einer Kraftstoffverbrauch senkenden Wirkungsgradsteigerung führt.

Gelöst wird diese Aufgabe mit einem Verfahren zum Betreiben einer Brennkraftmaschine, das die Merkmale gemäß Anspruch 1 umfasst. Bei diesem Verfahren ist vorgesehen, dass in einem Zylinder ein Arbeitskolben geführt ist. Es ist auch vorgesehen, dass bei dieser Brennkraftmaschine zumindest ein Einlassventil mit variablem Schließzeitpunkt eine Einlassöffnung des Zylinders verschließt und freigibt. Außerdem verschließt und öffnet zumindest ein Auslassventil mit variablem Öffnungszeitpunkt und konstantem Schließzeitpunkt eine Auslassöffnung des Zylinders. Das Verfahren zeichnet sich dadurch aus, dass die Brennkraftmaschine mit einem geometrischen Verdichtungsverhältnis betrieben wird, das auf das spezifische Teillast-Verdichtungsverhältnis angehoben ist. Die Brennkraftmaschine ist also auf eine möglichst hohe Verdichtung im Teillastbereich ausgelegt. Durch die Steuerzeitverstellung des Einlass- und Auslassventils kann jedoch im Volllastbereich das überhöhte Verdichtungsverhältnis zurückgenommen werden, so dass die erfindungsgemäße Brennkraftmaschine sowohl im Teillast- als auch im Volllastbereich mit optimalem Verdichtungsverhältnis betreibbar ist. Insbesondere ist also mit dem erfindungsgemäßen Verfahren vermieden, dass im Teillastbereich Wirkungsgradverluste hingenommen werden müssten. Dadurch, dass die erfindungsgemäße Brennkraftmaschine auch im Teillastbereich mit verbessertem Wirkungsgrad betrieben werden kann, tritt nicht nur eine Minderung des Kraftstoffverbrauchs ein, sondern auch die Abgasqualität ist verbessert. Mit der erfindungsgemäß wirkungsgradoptimierten Brennkraftmaschine können zusätzlich Abgastemperatur steigemde und senkende Maßnahmen sowie die Beeinflussung der Abgaszusammensetzung hinsichtlich der HC/CO/H₂/O₂-Anteile erreicht werden. Hiervon sind insbesondere Motorkonzepte mit NOx-Speicherkatalysatoren betroffen, welche ein eingeschränktes Temperaturfenster (ca. 220 bis 500°C) mit optimaler NOx-Konvertierung aufweisen sowie gegenüber konventionellen Drei-Wege-Katalysatoren eine eingeschränkte Hochtemperaturfestigkeit aufweisen (ca. 850°C gegenüber ca. 1000°C bei Drei-Wege-Katalysatoren).

Nach einer Weiterbildung der Erfindung ist vorgesehen, dass die Brennkraftmaschine mit einem geometrischen Verdichtungsverhältnis betrieben wird, das zwischen 14:1 und 24:1 liegt. Das geometrische Verdichtungsverhältnis bezeichnet hierbei das Volumen zwischen oberen Totpunkt OT und unteren Totpunkt UT des Kolbens. Es ist also möglich, Brennkraftmaschinen mit einem geometrischen Verdichtungsverhältnis zu betreiben, das gegenüber konventionellen Motoren deutlich höher liegt.

Gemäß einer Weiterbildung der Erfindung kann vorgesehen sein, dass die Brennkraftmaschine aufgeladen oder freisaugend arbeitet. Zusätzlich oder alternativ kann vorgesehen sein, dass die Brennkraftmaschine mit einem mageren Kraftstoff-Luft-Gemisch, insbesondere im Niedrig- und Teillastbereich, betreibbar ist.

Nach einer Weiterbildung der Erfindung ist vorgesehen, dass im Abgaskanal der Brennkraftmaschine eine Abgasreinigungsvorrichtung liegt, die als NOx-Speicherkatalysator arbeitet. Durch den erfindungsgemäßen Betrieb der Brennkraftmaschine können somit auch diese Speicherkatalysatoren verwendet werden, die -wie vorstehend erwähnt- ein eingeschränktes Temperaturfenster aufweisen, wobei dennoch die Brennkraftmaschine in großen Kennfeldbereichen mager arbeiten kann.

Bei einem Ausführungsbeispiel ist vorgesehen, dass im Ansaugkanal der Brennkraftmaschine eine Luftmassenbegrenzung drosselfrei ausgeführt wird. Selbstverständlich ist es auch möglich, den Ansaugkanal im Querschnitt zu verändem, insbesondere dann, wenn durch eine Forderung nach hohen EGR-Raten eine Drosselung erforderlich ist.

Bei einem bevorzugten Ausführungsbeispiel ist vorgesehen, daß die Brennkraftmaschine aufgeladen und eine Leistungssteigerung durch frühes Öffnen des Auslaßventils erreicht wird. Dadurch wird ein Teil der Expansionsarbeit in der Brennkraftmaschine von dieser auf die Aufladevorrichtung, insbesondere einen Turbolader, verlagert. Dadurch wird die Füllung des Brennraums mit Frischgemisch verbessert. Dies führt durch Zugeben der für den Lambda=1-Betrieb erforderlichen Kraftstoffmenge zu einer Umsetzung von Mehrleistung, die die Wirkungsgradverluste des frühen Auslaßöffnungszeitpunktes im dynamischen Betrieb mit wechselnden Lasten überkompensiert.

Bei einem Ausführungsbeispiel ist vorgesehen, daß das Einlaßventil die Einlaßöffnung mit variablem Schließzeitpunkt und mit konstantem Öffnungszeitpunkt verschließt und freigibt. In Verbindung mit dem Auslaßventil, das nach dem erfindungsgemäßen Verfahren mit einem variablen Öffnungszeitpunkt und konstantem Schließzeitpunkt arbeitet, ist es in vorteilhafter Weise möglich, zusätzlich eine Variation des Verdichtungsverhältnisses gegenüber dem Expansionsverhältnis durch entsprechende Wahl der Einlaß-Schließ- und Auslaß-Öffnungszeiten zu ermöglichen. Dadurch wird es insbesondere möglich, die Abgastemperatur zu beeinflussen.

Nach einem anderen Ausführungsbeispiel ist vorgesehen, daß das Einlaßventil die Einlaßöffnung mit variablem Schließzeitpunkt und variablem Öffnungszeitpunkt verschließt und freigibt. Vorzugsweise ist vorgesehen, daß im oberen Lastbereich das Einlaßventil klopfsensorgesteuert zunehmend früher geöffnet wird, um das Verdichtungsverhältnis an die Klopfgrenze anzupassen. Da in diesem Lastbereich das Expansionsverhältnis höher als das Verdichtungsverhältnis liegen kann, liegt dann auch in diesem Lastbereich die Abgastemperatur unter den Werten konventioneller Brennkraftmaschinen, so daß der Bereich der katalysatorschutzbedingten Vollastanreicherung kleiner ausfallen kann. Dies führt zu einer Verbrauchsminderung. Durch die klopfsensorgesteuerte Rücknahme des Verdichtungsverhältnisses liegt die darüber hinaus mögliche prozentuale Kraftstoffeinsparung unter den Werten des hochverdichteten Teillastbereichs. Außerdem liegt wegen der verlängerten Expansionsphase auf jeden Fall eine gewisse Verbrauchsminderung gegenüber konventionellen Motoren vor.

Weitere Ausgestaltungen ergeben sich aus den Unteransprüchen.

Die Erfindung wird nachfolgend anhand von Ausführungsbeispielen mit Bezug auf die Zeichnungen näher erläutert. Es zeigen:
- Figur 1: ein Kennfeld eines bekannten mit Direkt-Einspritzung arbeitenden Ottomotors,
- Figur 2: ein Kennfeld eines nach dem erfindungsgemäßen Verfahren arbeitenden Direkt-Einspritzer-Ottomotors,
- Figur 3: ein Kennfeld des nach dem erfindungsgemäßen Verfahren arbeitenden Ottomotors, wobei verschiedene Kennlinien für unterschiedliche Auslaßöffnungszeitpunkte beziehungsweise Einlaßöffnungszeitpunkte dargestellt sind,
- Figur 4: ein Kennfeld des nach dem erfindungsgemäßen Verfahren arbeitenden Ottomotors mit klopfsensorgesteuertem Verdichtungsverhältnis,
- Figur 5: ein Kennfeld des erfindungsgemäß arbeitenden Ottomotors, wobei das Expansionsverhältnis im statischen Betrieb wiedergegeben ist,
- Figur 6: ein Kennfeld des erfindungsgemäß arbeitenden Ottomotors, wobei die Abgastemperaturänderung gegenüber einem Motor mit festem Verdichtungsverhältnis wiedergegeben ist,
- Figur 7: ein Kennfeld der erfindungsgemäßen Brennkraftmaschine, wobei die Kraftstoffverbrauchsänderungen gegenüber einem Motor mit festem Verdichtungsverhältnis wiedergegeben sind und
- Figur 8: zeigt das Kennfeld eines erfindungsgemäß aufgeladenen Motors.

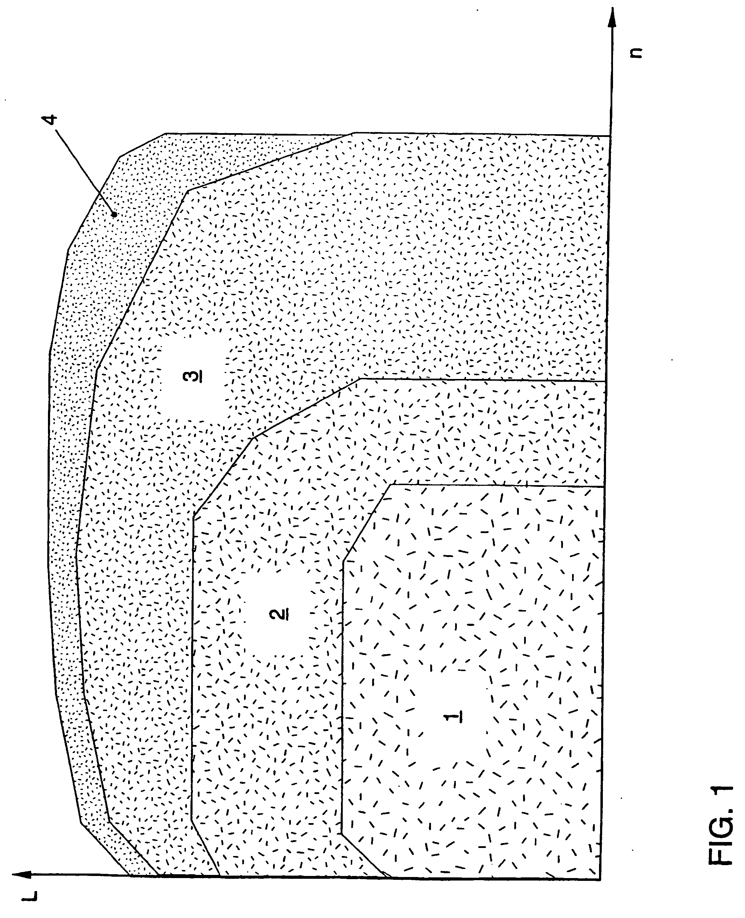

Figur 1 zeigt das Kennfeld eines bekannten Motors. Es ist in einem zweiachsigen orthogonalen Koordinatensystem die Last L über der Drehzahl n der Brennkraftmaschine aufgetragen. Durch unterschiedliche Schraffierungen sind unterschiedliche Betriebsbereiche der bekannten Brennkraftmaschine erkennbar. Im unteren Drehzahl- und Lastbereich 1 wird die bekannte Brennkraftmaschine im sogenannten geschichteten Magerbetrieb betrieben. Im mittleren Drehzahl- und Lastbereich 2 liegt der homogene Magerbetrieb vor. Im oberen Drehzahl- und Lastbereich 3 befindet sich die Brennkraftmaschine im Lambda=1-Betrieb. Mit steigender Drehzahl und/oder steigender Last schließt sich an den Bereich 3 der Bereich 4 der sogenannten Vollast-Anreicherung an, der gegebenenfalls als Bauteil-Schutz dient, also insbesondere die Abgasreinigungsvorrichtung der Brennkraftmaschine vor zu hohen Betriebstemperaturen schützt.

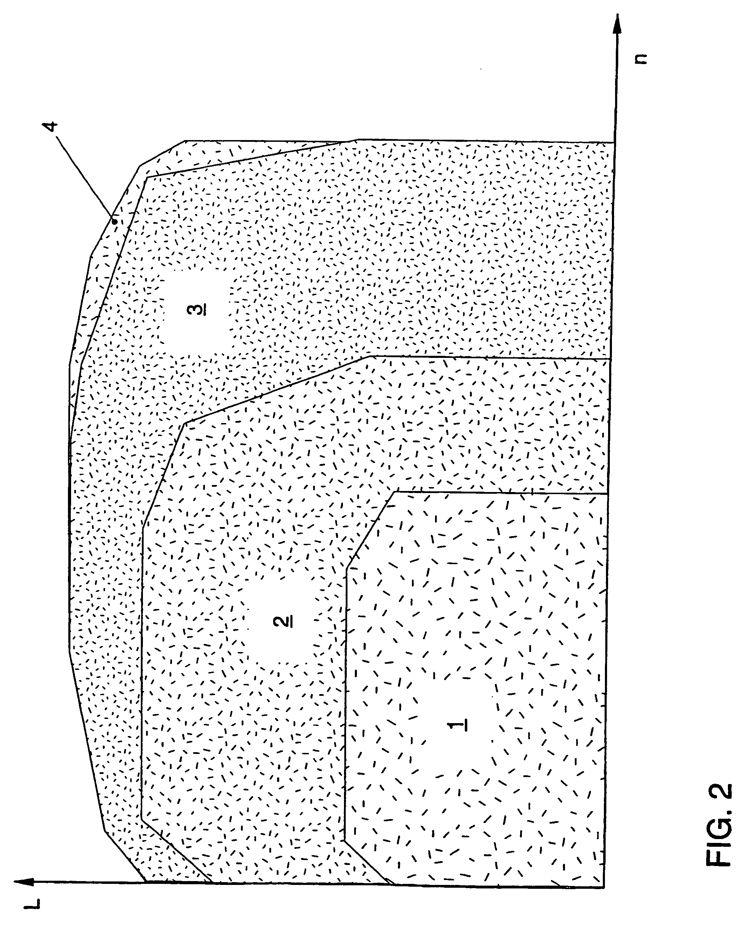

In Figur 2 ist das Kennfeld der erfindungsgemäßen Brennkraftmaschine wiedergegeben. Gleiche Bereiche wie in Figur 1 sind mit denselben Bezugszeichen versehen. Es ist ersichtlich, daß aufgrund der erfindungsgemäßen Maßnahmen der Bereich 4 der Vollastanreicherung erst bei einer höheren Drehzahl beziehungsweise einer höheren Last beginnt. Das heißt, die Vollastanreicherung muß gegebenenfalls erst ab einer höheren Drehzahl beziehungsweise einer höheren Last durchgeführt werden. Der Kraftstoffverbrauch der erfindungsgemäßen Brennkraftmaschine ist deshalb geringer als beim Stand der Technik.

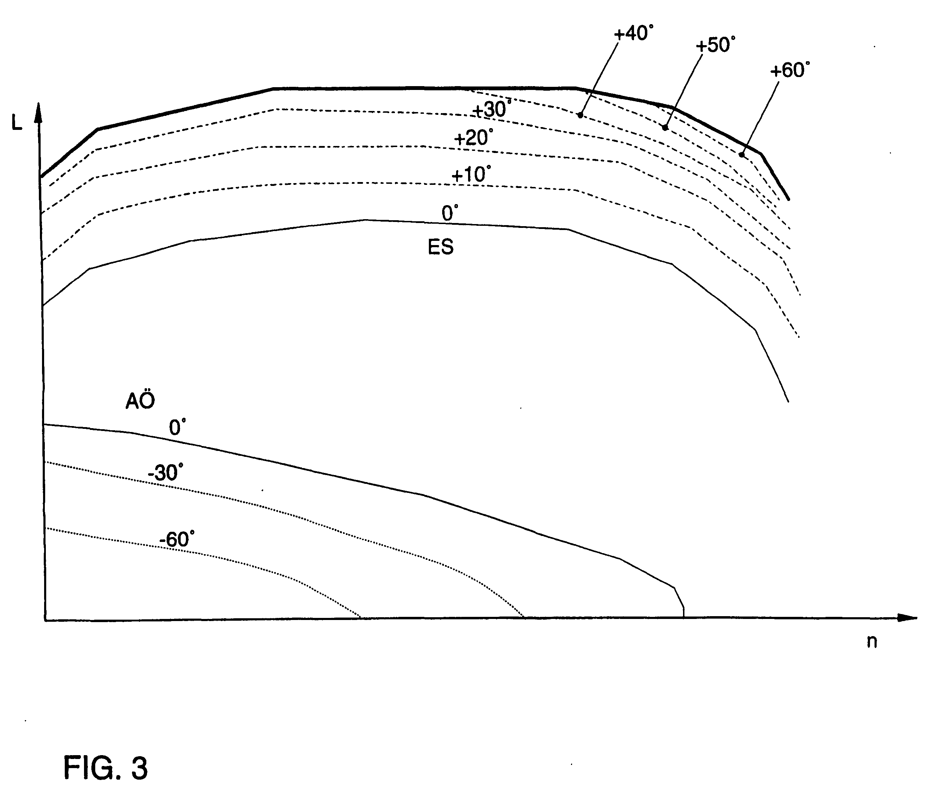

In Figur 3 sind mit punktierter Linie verschiedene Öffnungszeitpunkte AÖ des Auslaßventils wiedergegeben. Es ist ersichtlich, daß insbesondere im Bereich 1 (Figur 2) die Öffnungszeitpunkte des Auslaßventils nach "Früh" verschoben sind. Die verschiedenen Schließzeitpunkte ES des Einlaßventils sind mit gestrichelter Linie dargestellt. Es ist ersichtlich, daß bei höherer Last der Schließzeitpunkt des Einlaßventils nach "Spät" verschoben wird. Insbesondere im Bereich 4 mit Vollastanreicherung ergeben sich Schließzeitpunkte für das Einlaßventil, die um ca. 60° in Richtung "Spät" verschoben sind.

Überlagert man die Kennfelder der Figuren 2 und 3, so wird klar, daß die verschiedenen Schließ- und Öffnungszeitpunkte ES beziehungsweise AÖ des Einlaß- und Auslaßventils in den Bereichen 1 bis 4 liegen. Es ist auch ersichtlich, daß -ausgehend vom Basisschließzeitpunkt mit 0° bei höherer Last L der Schließzeitpunkt in Richtung "Spät" verstellt wird. Aufgrund der unterschiedlichen Kennlinien in Figur 3 ist außerdem ersichtlich, daß die Ventilsteuerzeiten des Einlaß- und Auslaßventils auch in Abhängigkeit der Drehzahl veränderbar sind.

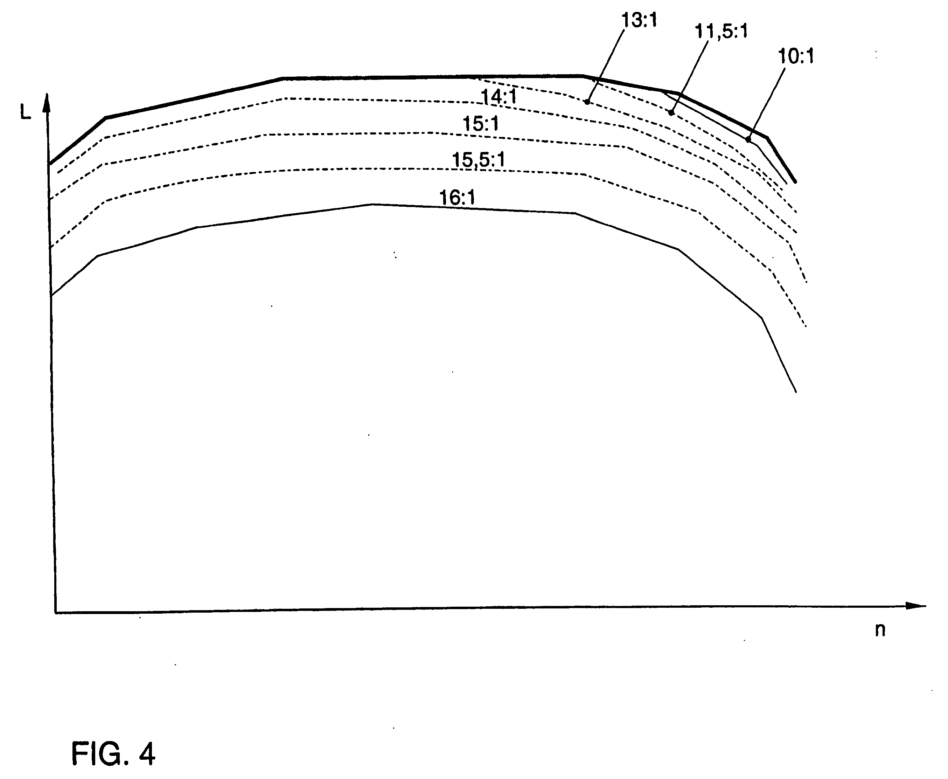

In Figur 4 sind verschiedene Kennlinien der erfindungsgemäßen Brennkraftmaschine aufgetragen, wobei dargestellt ist, daß mit steigender Last L beziehungsweise steigender Drehzahl n das Verdichtungsverhältnis verringert wird. Es ist insbesondere vorgesehen, daß das Verdichtungsverhältnis klopfsensorgesteuert ist. Durch die Variation des Verdichtungsverhältnisses auf Grund geänderter beziehungsweise variabler Ventilsteuerzeiten ist es also möglich, die erfindungsgemäße Brennkraftmaschine sowohl im Teillastbereich als auch im Vollastbereich mit maximal möglichem Verdichtungsverhältnis zu betreiben. In Figur 4 sind die einzelnen Kennlinien mit dem zugehörigen Verdichtungsverhältnis wiedergegeben.

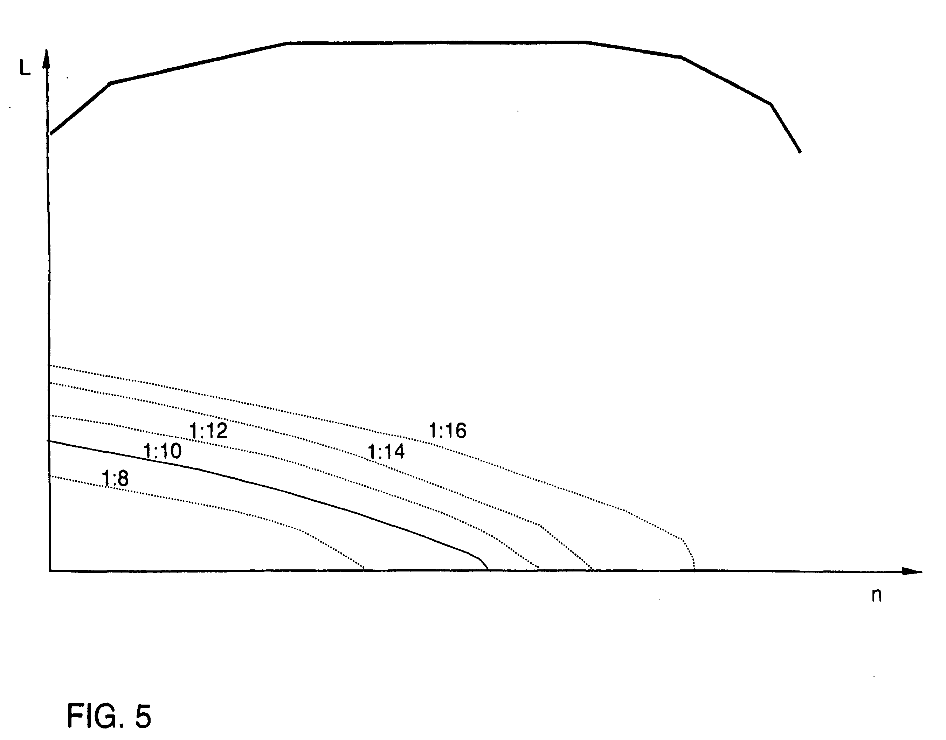

Figur 5 zeigt, daß das Expansionsverhältnis insbesondere im niedrigen bis mittleren Drehzahlbereich und bei geringer Last variiert werden kann. Mit fallender Last und sinkender Drehzahl ist vorgesehen, daß das Expansionsverhältnis verringert wird. Die einzelnen Expansionsverhältnisse sind den jeweiligen Kennlinien zugeordnet.

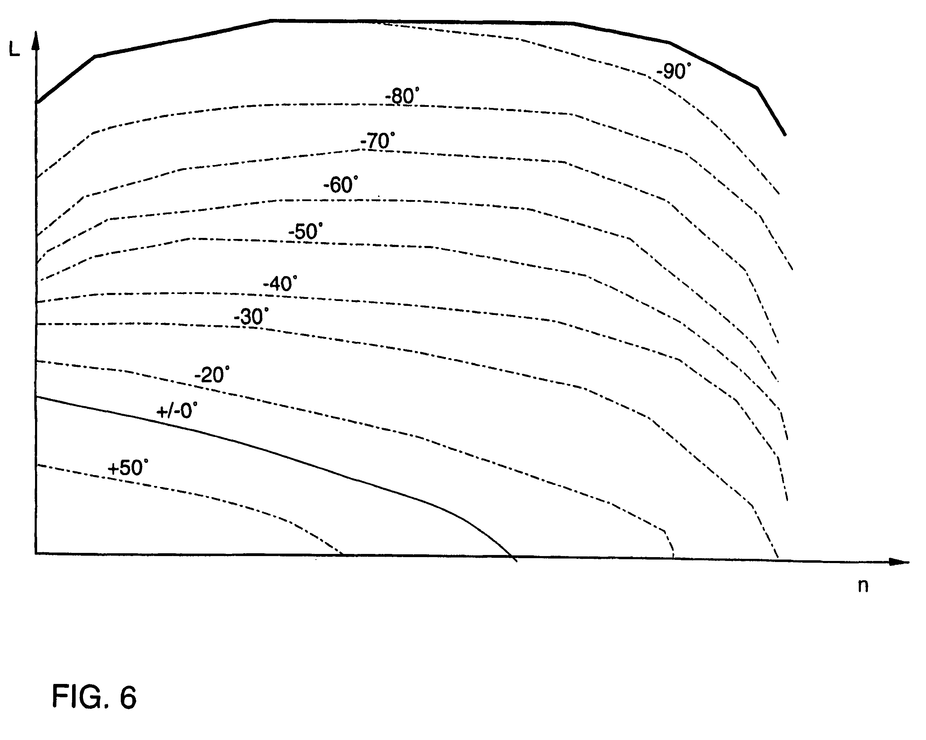

Aus Figur 6 wird deutlich, daß mit der nach dem erfindungsgemäßen Verfahren arbeitenden Brennkraftmaschine Abgastemperaturänderungen möglich sind, um die Abgasreinigungseinrichtung im vorgegebenen Temperaturfenster betreiben zu können. Im Bereich 4 der Vollastanreicherung wird mit einer um ca. 90°C geringeren Abgastemperatur gearbeitet. Mit fallender Last L nimmt auch die Temperaturverringerung des Abgases ab, um bei niedriger Last und niedriger Drehzahl sogar ansteigen zu können. Durch die Abgastemperaturbeeinflussung mittels Veränderung des Verdichtungsverhältnisses durch Änderung der Steuerzeiten der Einlaß- und Auslaßventile ist es möglich, die Brennkraftmaschine in Betriebsbereichen arbeiten zu lassen, bei denen bei bekannten Brennkraftmaschinen die Abgastemperatur zu hoch oder zu niedrig wäre, um die Abgasreinigungseinrichtung im vorgegebenen Temperaturfenster betreiben zu können. Das heißt, daß es mit dem erfindungsgemäßen Verfahren möglich ist, bei niedriger Last L und niedriger Drehzahl n die Abgastemperatur anzuheben. Die erfindungsgemäße Brennkraftmaschine kann also auch mit besonders niedriger Last und niedriger Drehzahl betrieben werden, ohne der Abgasreinigungseinrichtung zu schaden.

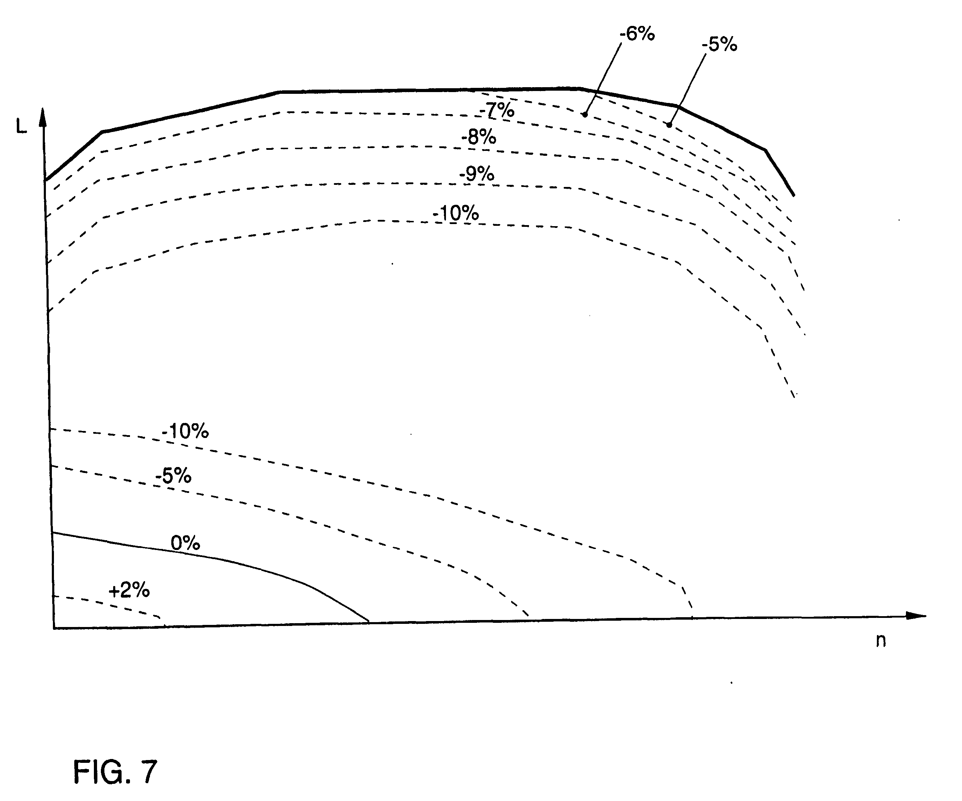

Aus Figur 7 geht die zu erwartende Kraftstoffverbrauchseinsparung gegenüber dem bekannten Motor hewor. Im Bereich 4 der Vollastanreicherung kann mit einem Kraftstoffverbrauchsrückgang um ca. 5% gerechnet werden. Mit fallender Last L erhöht sich die Kraftstoffverbrauchseinsparung bis auf ca. 10%. Im untersten Lastbereich bei niedriger Drehzahl kommt es zwar zu einem minimalen Verbrauchsanstieg um ca. 2%. Insgesamt ergibt sich jedoch, daß im dynamischen Betrieb mit wechselnden Lasten eine Einsparung des verbrauchten Kraftstoffes mit der nach dem erfindungsgemäßen Verfahren arbeitenden Brennkraftmaschine möglich ist.

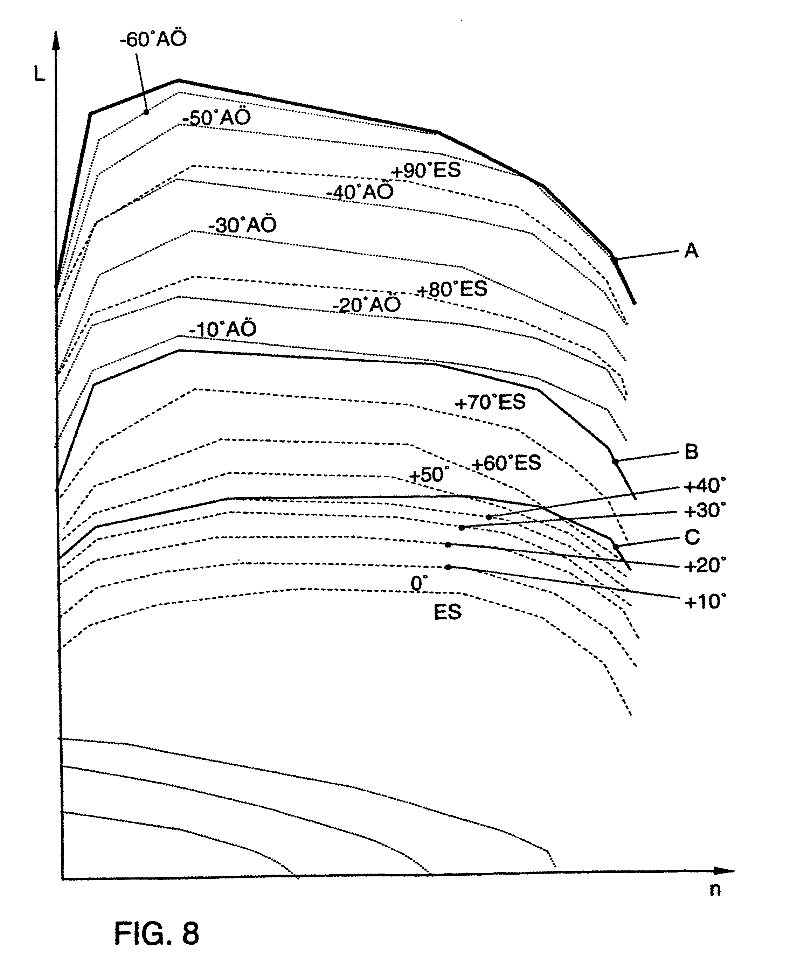

In Figur 8 ist die Kennlinie einer nach dem erfindungsgemäßen Verfahren arbeitenden Brennkraftmaschine aufgetragen, wobei die Brennkraftmaschine zusätzlich zur Variation der Ventilsteuerzeiten und erhöhtem geometrischen Verdichtungsverhältnis aufgeladen ist. Diese Kennlinie ist in Figur 8 mit A bezeichnet. Mit dem Bezugszeichen B ist die Kennlinie eines nach dem Stand der Technik arbeitenden, jedoch aufgeladenen Motors wiedergegeben. Die Kennlinie C ist einem bekannten Saugmotor zugeordnet. Es wird deutlich, daß der erfindungsgemäß aufgeladene Motor zur Abgabe höherer Lasten beziehungsweise Leistungen ausgebildet ist, also gegenüber den bekannten Brennkraftmaschinen eine Leistungssteigerung zeigt. In Figur 8 sind weitere Kennlinien punktiert eingetragen, die die einzelnen Betriebskennlinien des erfindungsgemäßen Motors wiedergeben, wobei der Öffnungszeitpunkt AÖ für das Auslaßventil entsprechend den in Figur 8 wiedergegebenen Gradangaben beziehungsweise Zeitpunkten verändert ist. Gestrichelt sind verschiedene Kennlinien des erfindungsgemäßen Motors aufgetragen, wobei unterschiedliche Schließzeitpunkte ES für das Einlaßventil berücksichtigt sind. Es ist wiedergegeben, daß der erfindungsgemäße Motor über einen sehr großen Lastbereich und Drehzahlbereich betrieben werden kann, wobei lediglich die Ventilsteuerzeiten zu verändern sind und der Motor aufgeladen, beispielsweise mittels eines Turboladers, ist.

## Patentansprüche

1. Verfahren zum Betreiben einer zumindest einen in einem Zylinder geführten Arbeitskolben aufweisenden Brennkraftmaschine, bei der zumindest ein Einlaßventil mit variablem Schließzeitpunkt eine Einlaßöffnung des Zylinders verschließt und freigibt und bei der zumindest ein Auslaßventil mit variablem Öffnungszeitpunkt und konstantem Schließzeitpunkt eine Auslaßöffnung des Zylinders verschließt und freigibt, **dadurch gekennzeichnet, dass** die Brennkraftmaschine ein geometrisches Verdichtungsverhältnis aufweist, das für den Wirkungsgrad im Teillastbereich optimal und höher als das für die Klopffestigkeit im Volllastbereich zulässige Volllast-Verdichtungsverhältnis ist, dass die Brennkraftmaschine im Teillastbereich mit dem geometrischen Verdichtungsverhältnis betrieben wird, und dass durch Steuerzeitverstellung des Einlass- und des Auslassventils im Volllastbereich das Verdichtungsverhältnis auf das Volllast-Verdichtungsverhältnis zurückgenommen wird.

2. Verfahren nach Anspruch 1, **dadurch gekennzeichnet, dass** die Brennkraftmaschine mit einem geometrischen Verdichtungsverhältnis betrieben wird, das zwischen 14:1 und 24:1 liegt.

3. Verfahren nach einem der vorhergehenden Ansprüche, **dadurch gekennzeichnet, dass** die Brennkraftmaschine aufgeladen oder freisaugend arbeitet.

4. Verfahren nach einem der vorhergehenden Ansprüche, **dadurch gekennzeichnet, dass** die Brennkraftmaschine mit einem mageren Kraftstoff-Luft-Gemisch betreibbar ist.

5. Verfahren nach einem der vorhergehenden Ansprüche, **dadurch gekennzeichnet, dass** im Abgaskanal der Brennkraftmaschine zumindest eine Abgasreinigungseinrichtung liegt, die als NOx-Speicherkatalysator arbeitet.

6. Verfahren nach einem der vorhergehenden Ansprüche, **dadurch gekennzeichnet, dass** im Ansaugkanal der Brennkraftmaschine eine Luftmassenbegrenzung drosselfrei durchgeführt wird.

7. Verfahren nach einem der Ansprüche 1 bis 5, **dadurch gekennzeichnet, dass** der Ansaugkanal querschnittveränderbar ist.

8. Verfahren nach einem der vorhergehenden Ansprüche, **dadurch gekennzeichnet, dass** die Brennkraftmaschine aufgeladen und eine Leistungssteigerung durch frühes Öffnen des Auslaßventils erreicht wird.

9. Verfahren nach einem der vorhergehenden Ansprüche, **dadurch gekennzeichnet, dass** die Aufladung mittels eines Turboladers erfolgt

10. Verfahren nach einem der vorhergehenden Ansprüche, **dadurch gekennzeichnet, dass** das Einlaßventil die Einlaßöffnung mit variablem Schließzeitpunkt und mit konstantem Öffnungszeitpunkt verschließt und freigibt.

11. Verfahren nach einem der Ansprüche 1 bis 9, **dadurch gekennzeichnet, dass** das Einlaßventil die Einlaßöffnung mit variablem Schließzeitpunkt und variablem Öffnungszeitpunkt verschließt und freigibt.

12. Verfahren nach einem der vorhergehenden Ansprüche, **dadurch gekennzeichnet, dass** der Schließzeitpunkt des Einlaßventils abhängig von der IST-Temperatur der Abgasreinigungseinrichtung festgelegt wird.

13. Verfahren nach einem der vorhergehenden Ansprüche, **dadurch gekennzeichnet, dass** der Schließzeitpunkt des Einlaßventils abhängig vom Last-Drehzahl-Betriebspunkt der Brennkraftmaschine festgelegt wird.

## Claims

1. Method for operating an internal combustion engine comprising at least one working piston which is guided in a cylinder and in which at least one inlet valve with a variable closing time closes and opens an inlet opening of the cylinder and in which at least one outlet valve with a variable opening time and constant closing time closes and opens an outlet opening of the cylinder, **characterized in that** the internal combustion engine has a geometric compression ratio which is optimum for the efficiency in the partial load range and higher than the full load compression ratio permitted for the knocking resistance in the full load range, **in that** the internal combustion engine is operated in the partial load range with the geometric compression ratio, and **in that** the compression ratio is returned to the full load compression ratio in the full load range by adjusting the control time of the inlet valve and of the outlet valve.

2. Method according to Claim 1, **characterized in that** the internal combustion engine is operated with a geometric compression ratio which is between 14:1 and 24:1.

3. Method according to one of the preceding claims, **characterized in that** the internal combustion engine operates in a supercharged or naturally aspirated fashion.

4. Method according to one of the preceding claims, **characterized in that** the internal combustion engine can be operated with a lean fuel/air mixture.

5. Method according to one of the preceding claims, **characterized in that** at least one exhaust gas purification device which operates as a NOx accumulator-type catalytic converter is located in the exhaust duct of the internal combustion engine.

6. Method according to one of the preceding claims, **characterized in that** an air mass flow rate limitation is carried out in a throttle-free fashion in the intake duct of the internal combustion engine.

7. Method according to one of Claims 1 to 5, **characterized in that** the intake duct has a variable cross section.

8. Method according to one of the preceding claims, **characterized in that** the internal combustion engine is supercharged and an increase in power is achieved by early opening of the outlet valve.

9. Method according to one of the preceding claims, **characterized in that** the supercharging is carried out by means of a turbocharger.

10. Method according to one of the preceding claims, **characterized in that** the inlet valve closes and opens the inlet opening with a variable closing time and with a constant opening time.

11. Method according to one of Claims 1 to 9, **characterized in that** the inlet valve closes and opens the inlet opening with a variable closing time and a variable opening time.

12. Method according to one of the preceding claims, **characterized in that** the closing time of the inlet valve is defined as a function of the actual temperature of the exhaust gas purification device.

13. Method according to one of the preceding claims **characterized in that** the closing time of the inlet valve is defined as a function of the load/rotational speed operating point of the internal combustion engine.

## Revendications

1. Procédé pour faire fonctionner un moteur à combustion interne présentant au moins un piston guidé dans un cylindre, dans lequel au moins une soupape d'admission avec un instant de fermeture variable ferme et libère une ouverture d'admission du cylindre et dans lequel au moins une soupape d'échappement avec un instant d'ouverture variable et un instant de fermeture constant ferme et libère une ouverture d'échappement du cylindre, **caractérisé en ce que** le moteur à combustion interne présente un rapport de compression géométrique, qui est optimal pour le rendement dans la plage de charge partielle et qui est supérieur au rapport de compression de pleine charge admissible pour la résistance aux chocs dans la plage de pleine charge, **en ce que** le moteur à combustion interne fonctionne dans la plage de charge partielle avec le rapport de compression géométrique et **en ce que** par réglage du temps de commande de la soupape d'admission et de la soupape d'échappement dans la plage de pleine charge, le rapport de compression est ramené au rapport de compression de pleine charge.

2. Procédé selon la revendication 1, **caractérisé en ce que** le moteur à combustion interne fonctionne avec un rapport de compression géométrique compris entre 14:1 et 24:1.

3. Procédé selon l'une quelconque des revendications précédentes, **caractérisé en ce que** le moteur à combustion interne fonctionne de manière suralimentée ou à aspiration libre.

4. Procédé selon l'une quelconque des revendications précédentes, **caractérisé en ce que** le moteur à combustion interne peut fonctionner avec un mélange air-carburant pauvre.

5. Procédé selon l'une quelconque des revendications précédentes, **caractérisé en ce qu'**au moins un dispositif de purification des gaz d'échappement se trouve dans le conduit de gaz d'échappement du moteur à combustion interne, lequel fonctionne en tant que catalyseur à accumulation de NOx.

6. Procédé selon l'une quelconque des revendications précédentes, **caractérisé en ce qu'**une limitation de la quantité d'air est effectuée sans étranglement dans le conduit d'admission du moteur à combustion interne.

7. Procédé selon l'une quelconque des revendications 1 à 5, **caractérisé en ce que** la section transversale du conduit d'admission peut être modifiée.

8. Procédé selon l'une quelconque des revendications précédentes, **caractérisé en ce que** le moteur à combustion interne est suralimenté et qu'une augmentation de puissance est obtenue par ouverture précoce de la soupape d'échappement.

9. Procédé selon l'une quelconque des revendications précédentes, **caractérisé en ce que** la suralimentation s'effectue au moyen d'un turbocompresseur.

10. Procédé selon l'une quelconque des revendications précédentes, **caractérisé en ce que** la soupape d'admission ferme et libère l'ouverture d'admission avec un instant de fermeture variable et avec un instant d'ouverture constant.

11. Procédé selon l'une quelconque des revendications 1 à 9, **caractérisé en ce que** la soupape d'admission ferme et libère l'ouverture d'admission avec un instant de fermeture variable et avec un instant d'ouverture variable.

12. Procédé selon l'une quelconque des revendications précédentes, **caractérisé en ce que** l'instant de fermeture de la soupape d'admission est établi en fonction de la température réelle du dispositif de purification des gaz d'échappement.

13. Procédé selon l'une quelconque des revendications précédentes, **caractérisé en ce que** l'instant de fermeture de la soupape d'admission est établi en fonction du point de fonctionnement de régime de charge du moteur à combustion interne.
